# EUROPÄISCHE PATENTSCHRIFT

(11) **EP 3 502 191 B1**
(45) Veröffentlichungstag und Bekanntmachung des Hinweises auf die Patenterteilung: **17.02.2021**
(21) Anmeldenummer: 17210163.6
(22) Anmeldetag: 22.12.2017
(51) Int. Cl.: C08L 77/02, C08L 77/06

(54) **POLYAMID-FORMMASSE**
POLYAMIDE MOULDING MATERIAL
SUBSTANCE DE FORMAGE EN POLYAMIDE

(43) Veröffentlichungstag der Anmeldung: 26.06.2019
(73) Patentinhaber: EMS-CHEMIE AG, 7013 Domat/Ems (CH)
(72) Erfinder: Wiedemann, Thomas, 7013 Domat/Ems (CH); Stöppelmann, Georg, 7402 Bonaduz (CH)
(74) Vertreter: Pfenning, Meinig & Partner mbB

(56) Entgegenhaltungen:
- EP-A1- 1 130 059
- EP-A1- 2 952 319
- JP-A- 2016 079 229

## Beschreibung

Die vorliegende Erfindung betrifft Polyamid-Formmassen, die auf einer Mischung spezifischer amorpher oder mikrokristalliner Polyamide und spezifischer teilkristalliner Polyamide beruhen und die sich durch eine sehr gute Spannungsrissbeständigkeit und gleichzeitig durch sehr gute optische Eigenschaften, insbesondere eine hohe Lichttransmission und einen tiefen Haze, auszeichnen.

Weiterhin betrifft die vorliegende Erfindung Formkörper aus der erfindungsgemäßen Polyamid-Formmasse und Verwendungen der Polyamid-Formmasse, zur Herstellung von Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks), Schutzhüllen für Mobiltelefone, Sichtteilen im Computer und Telekommunikationsbereich, Rohren, Schläuchen, Folien und Bauteilen von E-Zigaretten.

Mischungen aus amorphen oder mikrokristallinen Polyamiden und teilkristallinen Polyamiden sind bereits im Stand der Technik beschrieben.

EP 1 992 659 A1 beschreibt eine Polyamid-Formmassen-Schmelze zur Herstellung von transparenten Formteilen, die für Licht bis zu einer Wellenlänge von 400 nm eine reduzierte Transmission aufweisen. Die Polyamid-Formmasse basiert auf einer Mischung von transparenten Polyamiden oder einem Blend von transparenten Polyamiden mit zumindest einem teilkristallinen Polyamid.

EP 2 952 319 A1 betrifft ein Verfahren zum spannungsarmen Spritzgießen von amorphen oder mikrokristallinen Polyamiden, bei dem eine Schmelze der amorphen oder mikrokristallinen Polyamide bei bestimmten Bedingungen verarbeitet und spritzgegossen wird. Somit lassen sich spannungsarme Formkörper aus den amorphen oder mikrokristallinen Polyamiden durch Spritzguss herstellen. Dabei kann ein Teil des amorphen oder mikrokristallinen Polyamids durch ein teilkristallines Polyamid ersetzt sein.

EP 2 857 437 A1 beschreibt eine Polyamidmischung, die zu mindestens 50 Gew.-% aus einem Polyamidanteil besteht, der aus a) 50 bis 95 Gew.-Teilen PA PACMX (mit X = 8 bis 18) sowie b) 50 bis 5 Gew.-Teilen eines linearen, aliphatischen Polyamids mit im Mittel 8 bis 12 C-Atomen in den Monomereinheiten besteht. Wobei die Summe der Gew.-Teile 100 beträgt.

EP 0 755 777 A1 betrifft eine gleitfähige, siegelbare, sehr gut tiefziehbare Verbundfolie auf Basis von Polyamid und Polyolefinen, wobei die Folie aus mindestens einer Schicht aus aliphatischem Polyamid (A) und mindestens einer Schicht aus einem Polymerblend (B), welches aus 10 bis 60 Gew.-% aus amorphem Polyamid und 40 bis 90 Gew.-% aliphatischem Polyamid und mindestens einer thermoplastischen Siegelschicht (C) und mindestens einer Verbindungsschicht (D) besteht, so angeordnet, dass eine Siegelschicht und eine Schicht aus aliphatischem Polyamid auf den Außenseiten der Folie liegen und dass die Folie ungereckt ist.

EP 2 933 295 A1 beschreibt eine Polyamid-Formmasse, die ein amorphes Polyamid, ein teilkristallines aliphatisches Polyamid sowie Glasfasern zur Verstärkung enthält. Weiterhin enthält die Polyamid-Formmasse ein Polyamid aus einem cycloaliphatischen Diamin und einer dimerisierten Fettsäure.

US 2016/0369098 A1 betrifft die Verwendung mindestens eines teilkristallinen Polyamids in einem Glas-verstärkten amorphen Polyamidharz, um eine Zusammensetzung herzustellen, die transparenter ist als das Harz.

Ausgehend davon bestand die Aufgabe eine Polyamid-Formmasse bereitzustellen, die eine verbesserte Spannungsrissbeständigkeit zeigt, bei möglichst geringen Einbußen betreffend der optischen Eigenschaften, ausgedrückt durch einen tiefen Haze und eine hohe Lichttransmission.

Diese Aufgabe wird durch die Polyamid-Formmasse gemäß Anspruch 1 gelöst, welche die folgenden Merkmale aufweist.

Polyamid-Formmasse enthaltend die folgenden Komponenten (A) bis (C) oder bestehend aus diesen Komponenten:
(A) 50 bis 98 Gew.-% mindestens eines amorphen oder mikrokristallinen Polyamids, ausgewählt aus der Gruppe bestehend aus PA MACM10, PA MACM12, PA MACM14, PA MACM16, PA MACM18, PA NDT/INDT, PA TMDC10, PA TMDC12, PA TMDC14, PA TMDC16, PA TMDC18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/12, PA 6I/6T/MACMI/MACMT, PA 61/6T/MACMI/MACMT/12, PA 61/6T/MACMI/MACMT/MACM12, PA MACM6/11, PA MACM6/12, PA MACM10/11, PA MACM 10/12, PA MACM10/1010, PA MACM 12/1012, PA MACM12/1212, PA MACM14/1014, PA MACM14/1214, PA MACM16/1016, PA MACM18/1018, PA 61/6T/MACMI/MACMT/MACM 12/612, PA 61/6T/MACMI/MACMT/MACM12, PA MACMI/MACMT/MACM 12/12, PA MACMI/MACMT/MACM12, PA 61/6T/MACMI/MACMT/12, PA 6I/6T/6N/MACMI/MACMT/MACMN, PA TMDC12/TMDCT/TMDC36, PA TMDC12/TMDCI, PA TMDC12/TMDCI/TMDC36 und PA TMDC12/TMDCT und Mischungen oder Copolymeren hiervon, wobei das MACM bis zu maximal 35 Mol-% durch PACM und/oder TMDC ersetzt sein kann, bezogen auf die Summe der molaren Anteile aller Monomere von 100 Mol-% und/oder das Laurinlactam ganz oder teilweise durch Caprolactam ersetzt sein kann,
(B) 2 bis 40 Gew.-% mindestens eines teilkristallinen Polyamids ausgewählt aus der Gruppe bestehend aus PA 516, PA 616, PA 1016 und Mischungen hiervon;
(C) 0 bis 16 Gew.-% mindestens eines Zusatzstoffes;
wobei sich die Mengenanteile der Komponenten (A) bis (C) in Summe auf 100 Gew.-% ergänzen.

Vorteilhafte Ausführungsformen der erfindungsgemäßen Polyamid-Formmasse werden in den Ansprüchen 2 bis 11 angegeben.

Weiterhin betrifft die vorliegende Erfindung gemäß Anspruch 12 Formkörper herstellbar aus der erfindungsgemäßen Polyamid-Formmasse. Vorteilhafte Ausführungsformen dieser Formkörper werden in Anspruch 13 angegeben und Anspruch 14 betrifft Verwendungen der erfindungsgemäßen Polyamid-Formmasse.

### Begriffsdefinitionen

### Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im Folgenden synonym zu den IUPAC Namen der Monomere verwendet. Insbesondere kommen folgende Abkürzungen für Monomere in der vorliegenden Anmeldung vor MACM für Bis(4-amino-3-methyl-cyclohexyl)methan (auch als 3,3'-Dimethyl-4,4'-diaminodicyclohexylmethan bezeichnet, CAS-Nr. 6864-37-5), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0), PACM für Bis(4-amino-cyclohexyl)methan (auch als 4,4'-Diaminodicyclohexylmethan bezeichnet, CAS-Nr. 1761-71-3), N für 2,6-Naphthalindicarbonsäure (CAS-Nr. 1141-38-4), T für Terephthalsäure (CAS-Nr. 100-21-0), I für Isophthalsäure (CAS-Nr. 121-95-5), 16 für Hexadecandisäure (CAS-Nr. 505-54-4), 12 für Dodecandisäure (auch 1,10-Decandicarbonsäure genannt, CAS-Nr. 693-23-2), 6 für 1,6-Hexandiamin (CAS-Nr. 124-09-4), 12 für Laurinlactam (CAS-Nr. 947-04-6) und 12 für ω-Aminododecansäure (CAS-Nr. 693-57-2).

### Amorphe oder mikrokristalline Polyamide

Amorphe oder mikrokristalline Polyamide zeigen in der dynamischen Differenz-Kalorimetrie (engl. Differential Scanning Calorimetry, DSC) nach ISO 11357-3 (2013) bei einer Aufheizrate von 20 K/min bevorzugt eine Schmelzwärme von maximal 50 J/g, besonders bevorzugt von maximal 25 J/g, ganz besonders bevorzugt 0 bis 22 J/g.

Mikrokristalline Polyamide sind teilkristalline Polyamide und besitzen daher einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 75 % beträgt, gemessen nach ASTM D 1003-13 (2013).

Amorphe Polyamide weisen, verglichen mit den mikrokristallinen Polyamiden, eine geringere Schmelzwärme auf. Die amorphen Polyamide zeigen in der dynamischen Differenz-Kalorimetrie (engl. Differential Scanning Calorimetry, DSC) nach ISO 11357-3 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g und besitzen keinen Schmelzpunkt.

### Mengenangaben der Monomere

Enthalten die Polyamide der vorliegenden Erfindung nur Disäuren und Diamine, so summieren sich deren molare Mengenangaben auf 50 Mol-% für alle Diamine und 50 Mol-% für alle Disäuren und die Summe der Diamin- und Disäure-Anteile ergibt 100 Mol-% für das Polyamid.

Die Polyamide der vorliegenden Erfindung können neben Dicarbonsäuren und Diaminen auch Lactame oder ω-Aminosäuren zu X Mol-% enthalten, dann würde die Summe aller Diamine nur noch (50 - 0,5 X) Mol-% und die Summe aller Dicarbonsäuren (50 - 0,5 X) Mol-%, bezogen auf 100 Mol-% für das Polyamid betragen.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Polyamiden wiederfindet.

### Allgemeines zu Mengenangaben

Die Polyamid-Formmassen gemäß der vorliegenden Erfindung enthalten die Komponenten (A), (B) und gegebenenfalls (C) oder bestehen bevorzugt ausschließlich aus diesen, es gilt dabei die Maßgabe, dass sich die Komponenten (A), (B) und (C) in Summe auf 100 Gew.-% ergänzen. Die festgelegten Bereiche der Mengenangaben für die einzelnen Komponenten (A), (B) und (C) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (A) bis (C) 100 Gew.-% ergibt.

Alle im Polypolyamid (A) enthaltenen Monomere ergänzen sich in Summe auf 100 Mol-%. Die festgelegten Bereiche der Mengenangaben für die einzelnen Monomere sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller im Polyamid (A) enthaltenen Monomere 100 Mol-% ergibt.

### Polyamid-Formmasse

Die erfindungsgemäße Polyamid-Formmasse enthält die Komponenten (A) bis (C) oder besteht aus diesen.

Gemäß einer bevorzugten Ausführungsform der vorliegenden Erfindung liegt der Anteil von Komponente (A) in der Polyamid-Formmasse im Bereich von 55 bis 95,9 Gew.-%, bevorzugt von 63 bis 94,7 Gew.-% oder 63 bis 93,7 Gew.-% und besonders bevorzugt von 76 bis 89,5 Gew.%, bezogen auf das Gesamtgewicht der Polyamid-Formmasse.

Nach einer weiteren bevorzugten Ausführungsform vorliegender Erfindung liegt der Anteil von Komponente (B) in der Polyamid-Formmasse im Bereich von 4 bis 35 Gew.-%, bevorzugt von 5 bis 31 Gew.-% und besonders bevorzugt von 10 bis 20 Gew.%, bezogen auf das Gesamtgewicht der Polyamid-Formmasse.

Eine weitere bevorzugte Ausführungsform sieht vor, dass der Anteil von Komponente (C) in der Polyamid-Formmasse im Bereich von 0,1 bis 20 Gew.-%, bevorzugt von 0,3 bis 6 Gew.-% und besonders bevorzugt von 0,5 bis 4 Gew.-% bezogen auf das Gesamtgewicht der Polyamid-Formmasse liegt.

Gemäß einer bevorzugten Ausführungsform der vorliegenden Erfindung liegt der Anteil von Komponente (A) in der Polyamid-Formmasse im Bereich von 55 bis 95,9 Gew.-%, bevorzugt von 63 bis 94,7 Gew.-% oder 63 bis 93,7 Gew.-% und besonders bevorzugt von 76 bis 89,5 Gew.% und der Anteil von Komponente (B) in der Polyamid-Formmasse im Bereich von 4 bis 35 Gew.-%, bevorzugt von 5 bis 31 Gew.-% und besonders bevorzugt von 10 bis 20 Gew.% und der Anteil von Komponente (C) in der Polyamid-Formmasse im Bereich von 0,1 bis 20 Gew.-%, bevorzugt von 0,3 bis 6 Gew.-% und besonders bevorzugt von 0,5 bis 4 Gew.-%, jeweils bezogen auf das Gesamtgewicht der Polyamid-Formmasse.

Nach einer anderen bevorzugten Ausführungsform der vorliegenden Erfindung liegt der an einem aus der Polyamid-Formmasse hergestellten Formkörper (2 mm dicke Platten mit Breite und Länge: 60 x 60 mm) nach ASTM D1003 (2013) gemessene Haze der Polyamid-Formmasse, < 15 %, bevorzugt < 10 %, besonders bevorzugt < 6 % und ganz besonders bevorzugt < 1,0 %.

Eine weitere bevorzugte Ausführungsform der vorliegenden Erfindung sieht vor, dass die an einem aus der Polyamid-Formmasse hergestellten Formkörper (2 mm dicke Platten mit Breite und Länge: 60 x 60 mm) nach ASTM D1003 gemessene Transparenz mindestens 80 %, bevorzugt mindestens 85 % und besonders bevorzugt mindestens 90 % beträgt.

Gemäß einer bevorzugten Ausführungsform der vorliegenden Erfindung weist ein Prüfkörper aus der erfindungsgemäßen Polyamid-Formmasse
- einen Zug-E-Modul bestimmt nach ISO 527 (2012) von mindestens 1000 MPa, bevorzugt mindestens 1200 MPa und besonders bevorzugt mindestens 1300 MPa aufweist; und/oder
- eine Spannungsrissbeständigkeit in Toluol bestimmt nach DIN 53449-3 (1984) Biegestreifenverfahren von mindestens 20 MPa, bevorzugt mindestens 25 MPa und besonders bevorzugt mindestens 30 MPa aufweist; und/oder
- eine Spannungsrissbeständigkeit in n-Hexan bestimmt nach DIN 53449-3 (1984) Biegestreifenverfahren von mindestens 20 MPa, bevorzugt mindestens 25 MPa und besonders bevorzugt mindestens 30 MPa aufweist; und
- der an einem aus der Polyamid-Formmasse hergestellten Formkörper (2 mm dicke Platten mit Breite und Länge: 60 x 60 mm) nach ASTM D1003 (2013) gemessene Haze der Polyamid-Formmasse, < 15 %, bevorzugt < 10 %, besonders bevorzugt < 6 % und ganz besonders bevorzugt < 1,0 % beträgt; und
- die an einem aus der Polyamid-Formmasse hergestellten Formkörper (2 mm dicke Platten mit Breite und Länge: 60 x 60 mm) nach ASTM D1003 (2013) gemessene Lichttransmission mindestens 80 %, bevorzugt mindestens 85 % und besonders bevorzugt mindestens 90 % beträgt.

Gemäß einer bevorzugten Ausführungsform der vorliegenden Erfindung ist die erfindungsgemäße Polyamid-Formmasse frei von Glasfasern.

Im Folgenden werden bevorzugte Ausführungsformen für die Komponenten (A) bis (C) angegeben.

### Komponente (A)

Gemäß einer bevorzugten Ausführungsform der vorliegenden Erfindung beträgt der Gehalt an Naphthalindicarbonsäure in Komponente (A) 0 bis 10 Mol-%, bezogen auf die Summe der molaren Anteile aller Monomere von Komponente (A) von 100 Mol-%.

Eine andere bevorzugte Ausführungsform vorliegender Erfindung sieht vor, dass der Lactam- und/oder ω-Aminosäuregehalt in Komponente (A) 0 bis 50 Mol-%, bevorzugt 0 bis 40 Mol-% und besonders bevorzugt 0 bis 35 Mol-%, bezogen auf die Summe der molaren Anteile aller Monomere von Komponente (A) von 100 Mol-%, beträgt.

Nach einer weiteren bevorzugten Ausführungsform der vorliegenden Erfindung beträgt der Gehalt an Naphthalindicarbonsäure in Komponente (A) maximal 10 Mol-%, bezogen auf die Summe der molaren Anteile aller Monomere von Komponente (A) von 100 Mol-% und der Lactam- und/oder ω-Aminosäuregehalt in Komponente (A) beträgt 0 bis 50 Mol-%, bevorzugt 0 bis 40 Mol-% und besonders bevorzugt 0 bis 35 Mol-%, bezogen auf die Summe der molaren Anteile aller Monomere von Komponente (A) von 100 Mol-%.

Gemäß einer anderen bevorzugten Ausführungsform vorliegender Erfindung ist Komponente (A) ausgewählt aus der Gruppe bestehend aus PA MACM10, PA MACM12, PA MACM14, PA MACM16, PA MACM18, PA MACM36, PA TMDC10, PATMDC12, PA TMDC14, PATMDC16, PATMDC18, PA NDT/INDT, PA PACM10/11, PA PACM10/12, PA PACM12/612, PA PACM12/PACM14/612/614, PA MACMI/12, PA MACMT/12, PA MACMI/MACM12, PA MACMT/MACM12, PA MACMI/MACMT/12, PA MACMI/MACMT/MACM12, PA MACMI/MACMT/MACM12/12, PA MACMI/MACMT/MACM12, PA 6I/6T/MACMI/MACMT, PA 6I/6T/MACMI/MACMT/12, PA 6I/6T/MACMI/MACMT/MACM12/12, PA 61/6T/MACMI/MACMT/MACM12, PA MACM6/11, PA MACM6/12, PA MACM 10/11, PA MACM 10/12, PA MACM10/1010, PA MACM 12/1012, PA MACM 12/1212, PA MACM 14/1014, PA MACM 14/1214, PA MACM 16/1016, PA MACM 18/1018, PA MACM10/PACM10, PA MACM 12/PACM 12, PA MACM 14/PACM 14, PA MACM16/PACM16, PA MACM 18/PACM 18, PA 6I/6T/MACMI/MACMT/PACMI/PACMT/12, PA 6I/6T/MACMI/MACMT/MACM12/PACMI/PACMT/PACM12 und Mischungen oder Copolymeren hiervon.

Besonders bevorzugt ist Komponente (A) ausgewählt aus der Gruppe bestehend aus PA MACM12, PA MACM14, PA MACM16, PA MACM18, PATMDC16, PA TMDC18, PA NDT/INDT, PA PACM12/612, PA PACM12/PACM14/612/614, PA MACMI/12, PA MACMT/12, PA MACMI/MACM12, PA MACMI/MACMT/12, PA MACMI/MACMT/MACM12, PA 61/6T/MACMI/MACMT/12, PA MACM 10/1010, PA MACM 12/1012, PA MACM 12/1212, PA MACM 14/1014, PA MACM 16/1016, PA MACM 18/1018, PA MACM10/PACM10, PA MACM12/PACM12, PA MACM14/PACM14, PA MACM16/PACM16, PA MACM18/PACM18, PA 6I/6T/MACMI/MACMT/PACMI/PACMT/12 und Mischungen hiervon.

Insbesondere bevorzugt ist Komponente (A) ausgewählt aus der Gruppe bestehend aus PA MACM14, PA MACM16, PA MACM18, PA MACMI/12, PA MACMI/MACM12, PA MACMI/MACMT/12, PA MACMI/MACMT/MACM12, PA 61/6T/MACMI/MACMT/12, PA MACM10/1010, PA MACM12/1012, PA MACM 12/1212, PA MACM 14/1014, PA MACM 16/1016, PA MACM 18/1018, PA MACM12/PACM12, PA MACM14/PACM14, PA MACM16/PACM16, PA MACM18/PACM18, PA 6I/6T/MACMI/MACMT/PACMI/PACMT/12 und Mischungen hiervon.

Am bevorzugtesten ist Komponente (A) ausgewählt ist aus der Gruppe bestehend aus PA MACM14, PA MACM16, PA MACM18, PA MACMI/12, PA MACMI/MACMT/12, PA MACM10/1010, PA MACM14/1014, PA MACM 16/1016, PA MACM 18/1018, PA MACM12/PACM12, PA MACM14/PACM14, PA MACM16/PACM16, PA MACM18/PACM18 und Mischungen hiervon.

Eine andere bevorzugte Ausführungsform sieht vor, dass Komponente (A) PA PACM12/612 enthält und besonders bevorzugt daraus besteht und der Anteil von 1,6-Hexandiamin 2 bis 24 Mol-% und bevorzugt 6 bis 15 Mol-% beträgt, wobei die Summe der molaren Anteile aller Monomere 100 Mol-% ergibt. Die Polyamide PA PACM12/612 mit maximal 24 Mol-% 1,6-Hexandiamin sind mikrokristallin.

Gemäß einer weiteren bevorzugten Ausführungsform enthält Komponente (A) PA PACM12/PACM14/612/614 und besteht besonders bevorzugt daraus und der Anteil von 1,6-Hexandiamin beträgt 2 bis 24 Mol-% und bevorzugt 6 bis 15 Mol-% und/oder der Anteil an 1,14-Tetradecandisäure beträgt 2 bis 24 Mol-% und bevorzugt 6 bis 15 Mol-%, wobei die Summe der molaren Anteile aller Monomere 100 Mol-% ergibt. Die Polyamide PA PACM12/PACM14/612/614 mit maximal 24 Mol-% 1,6-Hexandiamin sind mikrokristallin.

Nach einer anderen bevorzugten Ausführungsform enthält Komponente (A) das amorphe PA MACMI/12 und besteht besonders bevorzugt daraus und der Anteil von Laurinlactam beträgt 15 bis 50 Mol-%, bevorzugt 20 bis 40 Mol-% und insbesondere bevorzugt 19 Mol % oder 35 Mol-%, wobei die Summe der molaren Anteile aller Monomere 100 Mol-% ergibt.

Eine andere bevorzugte Ausführungsform der vorliegenden Erfindung sieht vor, dass Komponente (A) das amorphe PA MACMI/MACMT/12 enthält und besonders bevorzugt daraus besteht und der Anteil an Isophthalsäure gleich dem Anteil an Terephthalsäure ist und/oder der Anteil an Laurinlactam 15 bis 40 Mol-% und bevorzugt 20 bis 30 Mol-% beträgt, besonders bevorzugt ist das Molverhältnis der Bausteine MACMI/MACMT/12 = 38/38/24, wobei die Summe der molaren Anteile aller Monomere 100 Mol-% ergibt.

Gemäß einer weiteren bevorzugten Ausführungsform enthält Komponente (A) das amorphe PA MACMI/MACMT/MAMC12 und besteht bevorzugt daraus und der Anteil an Isophthalsäure ist gleich dem Anteil an Terephthalsäure und/oder der Anteil an Dodecandisäure beträgt 30 bis 60 Mol-% und bevorzugt 40 bis 50 Mol-%, besonders bevorzugt ist das Molverhältnis der Bausteine MACMI/MACMT/MACM12 = 27/27/46, wobei die Summe der molaren Anteile aller Monomere 100 Mol-% ergibt.

Nach einer anderen bevorzugten Ausführungsform enthält Komponente (A) das amorphe PA 6I/6T/MACMI/MACMT/12 und besteht bevorzugt daraus und der Anteil an Isophthalsäure ist gleich dem Anteil an Terephthalsäure und/oder der Anteil an Laurinlactam ist 1 bis 25 Mol-%, bevorzugt 2 bis 15 Mol-%, besonders bevorzugt ist das Molverhältnis der Bausteine 6I/6T/MACMI/MACMT/12 = 34/34/14/14/4 oder 39/39/9,6/9,6/2,8, wobei die Summe der molaren Anteile aller Monomere 100 Mol-% ergibt.

Eine andere bevorzugte Ausführungsform der vorliegenden Erfindung sieht vor, dass Komponente (A) ein Polyamid ausgewählt aus der Gruppe bestehend aus PA MACM10/1010, PA MACM12/1012, PA MACM12/1212, PA MACM14/1014, PA MACM14/1214 und Mischungen daraus enthält und besonders bevorzugt daraus besteht und der Anteil an linear aliphatischem Polyamid 5 bis 45 Mol-%, bevorzugt 8 bis 27 Mol-% und besonders bevorzugt 10 bis 22 Mol-% beträgt; wobei die Summe der molaren Anteile aller Monomere 100 Mol-% ergibt. Die Polyamide PA MACM10/1010, PA MACM12/1012, PA MACM12/1212, PA MACM14/1014, PA MACM14/1214 mit maximal 27 Mol-% linear aliphatischem Diamin sind amorph.

Gemäß einer weiteren bevorzugten Ausführungsform enthält Komponente (A) ein Polyamid ausgewählt aus der Gruppe bestehend aus PA MACM10/PACM10, PA MACM12/PACM12, PA MACM14/PACM14, PA MACM18/PACM18 und Mischungen daraus und besteht besonders bevorzugt daraus und der Anteil von PACM beträgt 1 bis 35 Mol-% und bevorzugt 2 bis 25 Mol-%, wobei die Summe der molaren Anteile aller Monomere 100 Mol-% ergibt. Die Polyamide PA MACM10/PACM10, PA MACM12/PACM12 bzw. PA MACM14/PACM14 PA MACM16/PACM16, PA MACM18/PACM18 mit maximal 25 Mol-% PACM sind amorph.

Eine weitere bevorzugte Ausführungsform sieht vor, dass Komponente (A) das amorphe PA 6I/6T/MACMI/MACMT/PACMI/PACMT/12 enthält und besonders bevorzugt daraus besteht und der Anteil an Isophthalsäure gleich dem Anteil an Terephthalsäure ist und/oder der Anteil an Laurinlacam 2 bis 15 Mol-%, bevorzugt 2 bis 7 Mol-% ist und/oder der Anteil an PACM 2 bis 7 Mol-% ist, wobei die Summe der molaren Anteile aller Monomere 100 Mol-% ergibt.

Weiterhin ist bevorzugt, wenn Komponente (A) eine relative Viskosität bestimmt an Lösungen von 0,5 g Polymer in 100 ml m-Kresol gemäß ISO 307 (2013) bei 20°C von 1,35 bis 2,15, besonders bevorzugt von 1,40 bis 2,00 und ganz besonders bevorzugt von 1,45 und 1,90 aufweist und/oder wenn Komponente (A) eine Glasübergangstemperatur von 100 bis 210 °C, bevorzugt von 110 bis 200 °C und besonders bevorzugt von 120 bis 190 °C aufweist, wobei die Glasübergangstemperatur mittels DSC gemäß ISO 11357-2 (2013) mit einer Aufheizrate von 20 K/min bestimmt wird.

### Komponente (B)

Die Komponente (B) ist ausgewählt aus teilkristallinen Polyamiden ausgewählt aus der Gruppe bestehend aus PA 516, PA 616, PA 1016 und Mischungen davon.

Gemäß einer bevorzugten Ausführungsform ist Komponenten (B) ausgewählt aus der Gruppe bestehend aus PA 616, PA 1016 und Mischungen hiervon und insbesondere bevorzugt ist Komponenten (B) PA 616.

Weiterhin ist bevorzugt, wenn Komponente (B) eine relative Viskosität bestimmt an Lösungen von 0,5 g Polymer in 100 ml m-Kresol gemäß ISO 307 (2013) bei 20°C von 1,45 bis 2,40, besonders bevorzugt von 1,60 bis 2,30 und ganz besonders bevorzugt von 1,75 und 2,20 aufweist und/oder wenn Komponente (B) einen Schmelzpunkt von 170 bis 205 °C, bevorzugt von 175 bis 200 °C aufweist, wobei der Schmelzpunkt mittels DSC gemäß ISO 11357-3 (2013) mit einer Aufheizrate von 20 K/min bestimmt wird.

### Komponente (C)

Gemäß einer bevorzugten Ausführungsform der vorliegenden Erfindung sind die Zusatzstoffe (C) ausgewählt aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Kohlenstoffnanoröhrchen, photochromen Agenzien, Antistatika, Entformungsmitteln, Kondensationskatalysatoren, Kettenreglern, Entschäumern, Antiblockmitteln, kettenverlängernden Additiven, optischen Aufhellern, IR-Absorbern, NIR-Absorbern, halogenhaltigen Flammschutzmitteln, halogenfreien Flammschutzmitteln, natürlichen Schichtsilikaten, synthetischen Schichtsilikaten, metallischen Pigmenten, Metallflittern, metallbeschichteten Partikeln, teilchenförmigen Füllstoffen, faserförmigen Füllstoffen, nanoskaligen Füllstoffen mit einem Partikeldurchmesser (*d₉₅*) von maximal 100 nm, bestimmt mittels Laserbeugung nach ISO 13320 (2009) und Mischungen davon.

Die Schichtsilikate und Füllstoffe können oberflächenbehandelt sein. Dies kann mit einem geeigneten Schlichte- oder Haftvermittlersystem geschehen. Dazu können zum Beispiel Systeme auf Basis von Fettsäuren, Wachsen, Silanen, Titanaten, Polyamiden, Urethanen, Polyhydroxyether, Epoxiden, Nickel respektive Kombinationen oder Mischungen davon verwendet werden.

Hinsichtlich der faserförmigen bzw. verstärkenden Füllstoffe bestehen grundsätzlich keinerlei Beschränkungen.

Als teilchenförmige Füllstoffe kommen alle dem Fachmann bekannten Füllstoffe in Frage. Hierzu zählen insbesondere partikuläre Füllstoffe ausgewählt aus der Gruppe bestehend aus Mineralen, Talk, Glimmer, Dolomit, Silikaten, Quarz, Titandioxid, Wollastonit, Kaolin, Kieselsäuren, Magnesiumcarbonat, Magnesiumhydroxid, Kreide, gemahlenem Glas, Glasflakes, gemahlenen Carbonfasern, gemahlenem oder gefälltem Calciumcarbonat, Kalk, Feldspat, Bariumsulfat, Zinksulfid, Zinkoxid, permanentmagnetischen oder magnetisierbaren Metallen oder Legierungen, Glaskugeln, Hohlglaskugeln, hohlkugeligen Silikatfüllstoffen und Mischungen hiervon.

Eine andere bevorzugte Ausführungform sieht vor, dass die faserförmigen Füllstoffe ausgewählt sind aus der Gruppe bestehend aus Glasfasern, Carbonfasern, Metallfasern, Aramidfasern, pflanzlichen Fasern, Cellulosefasern, insbesondere Nano-Cellulosefasern, Polymerfasern, Whiskers, Mineralfasern und Mischungen hiervon und insbesondere bevorzugt sind Carbonfasern, Metallfasern, Aramidfasern, pflanzliche Fasern, Cellulosefasern, insbesondere Nano-Cellulosefasern, Polymerfasern, Whiskers, Mineralfasern und Mischungen hiervon.

Gemäß einer bevorzugten Ausführungsform der vorliegenden Erfindung ist Komponente (C) frei von Glasfasern.

In einer besonders bevorzugten Ausführungsform ist Komponente (C) frei von faserförmigen Füllstoffen.

### Formkörper

Die erfindungsgemäßen Formkörper können aus der erfindungsgemäßen Polyamid-Formmasse über die gängigen Verarbeitungstechniken, wie z.B. Spritzgussverfahren oder Extrusionsverfahren hergestellt werden.

Eine bevorzugte Ausführungsform vorliegender Erfindung sieht vor, dass der Formkörper ausgewählt ist aus der Gruppe bestehend aus Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oderTrinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks), Schutzhüllen für Mobiltelefone, Sichtteilen im Computer und Telekommunikationsbereich, Rohren, Schläuchen, Folien und Bauteilen von E-Zigaretten.

### Verwendungen

Weiterhin betrifft die vorliegende Erfindung die Verwendung der oben definierten erfindungsgemäßen Polyamid-Formmasse zur Herstellung von Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks), Schutzhüllen für Mobiltelefone, Sichtteilen im Computer und Telekommunikationsbereich, Rohren, Schläuchen, Folien und Bauteilen von E-Zigaretten.

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Messmethoden

Im Rahmen dieser Anmeldung wurden die folgenden Messmethoden verwendet.

### Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Glasübergangstemperatur (Tg) und Schmelzpunkt

Die Bestimmung der Glasübergangstemperatur und des Schmelzpunkts erfolgte nach ISO 11357-2 und -3 (2013) an Granulat.

Die Differential Scanning Calorimetry (DSC) wurde bei jeder der beiden Aufheizungen mit einer Aufheizrate von 20 K/min durchgeführt. Nach der ersten Aufheizung wurde die Probe in Trockeneis abgeschreckt. Glasübergangstemperatur (Tg) und Schmelzpunkt wurden bei der zweiten Aufheizung bestimmt. Als Schmelzpunkt wurde die Temperatur am Peakmaximum angegeben. Der Mittelpunkt des Glasübergangsbereichs, welcher als Glasübergangstemperatur (Tg) angegeben wurde, wurde nach der Methode "Half Height" ermittelt.

### Zug-E-Modul

Die Bestimmung des Zug-E-Moduls wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### Spannungsrissbeständigkeit

Die Bestimmung der Spannungsrissbeständigkeit wurde gemäß DIN 53449-3 (1984) Biegestreifenverfahren an ISO-Zugstäben, Norm: ISO/CD 3167, Typ A1, 170 x 20/10 x 4 mm bei einer Temperatur von 23 °C durchgeführt. Gemessen wird die Randfaserdehnung bei der nach 60-sekündigem Eintauchen des unter Spannung stehenden ISO-Zugstabes in das Lösungsmittel Risse mit bloßem Auge sichtbar sind. Zur Umrechnung der gemessenen Randfaserdehnung in die angegebene Spannung wird der erhaltene Prozentwert der Randfaserdehnung in Dezimalschreibweise mit dem Zug-E-Modul (trocken, MPa) des vermessenen Materials multipliziert.

### Lichttransmission und Haze

Lichttransmission und Haze wurden bei 23 °C gemäß der ASTM D 1003 (2013) an 60 x 60 mm Platten (Breite x Länge) mit 2 mm Dicke und Filmanguss auf einem "Haze Gard plus" der Firma Byk Gardner mit CIE Lichtart C ermittelt. Der Lichttransmissionswert wurde in % der eingestrahlten Lichtmenge angegeben.

### Herstellung der Prüfkörper

Die Prüfkörper wurden auf einer Spritzgussmaschine der Firma Arburg, Modell Allrounder 420 C 1000-250 mit einer 3-Zonen-Standard-Schnecke mit einem Durchmesser von 25 mm hergestellt. Dabei wurden vom Einzug zur Düse auf- und absteigende Zylindertemperaturen im Bereich von 250 bis 320 °C verwendet.

Die ISO-Zugstäbe und Platten 60 x 60 x 2 mm wurden bei einer Werkzeugtemperatur von 80 °C hergestellt, wobei für die Platten ein poliertes Werkzeug verwendet wurde.

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel, gelagert.

### 2 Ausgangsmaterialien

Die in den Beispielen und Vergleichsbeispielen verwendeten Materialien werden in den Tabellen 1 und 2 zusammengefasst.

**Tabelle 1: In den Beispielen und Vergleichsbeispielen verwendete Materialien.**

| **Komponenten** | **Beschreibung** | **Hersteller** |
|---|---|---|
| Polyamid MACMI/12 (A1) | Amorphes Polyamid MACMI/12 aus Bis(3-methyl-4-amino-cyclohexyl)methan (32,5 Mol-%), Isophthalsäure (32,5 Mol-%) und Laurinlactam (35 Mol-%) | EMS-CHEMIE AG, Schweiz |
| | RV 1,56 (gemessen mit 0,5 g in 100 ml m-Kresol bei 20 °C) | |
| | Glasübergangstemperatur 160 °C | |
| Polyamid MACM12 (A2) | Amorphes Polyamid MACM12 aus Bis(3-methyl-4-amino-cyclohexyl)methan und Dodecandisäure | EMS-CHEMIE AG, Schweiz |
| | RV 1,71 (gemessen mit 0,5 g in 100 ml m-Kresol bei 20 °C) | |
| | Glasübergangstemperatur 155 °C | |
| Polyamid MACM12/PACM12 (A3) | Amorphes Polyamid MACM12/PACM12 aus Bis(3-methyl-4-amino-cyclohexyl)methan (35 Mol-%), Bis(4-amino-cyclohexyl)methan (15 Mol-%) und Dodecandisäure (50 Mol-%) | EMS-CHEMIE AG, Schweiz |
| | RV 1,85 (gemessen mit 0,5 g in 100 ml m-Kresol bei 20 °C) | |
| | Glasübergangstemperatur 145 °C | |
| Polyamid MACM16 (A4) | Amorphes Polyamid MACM16 aus Bis(3-methyl-4-amino-cyclohexyl)methan und 1,16-Hexadecandisäure | EMS-CHEMIE AG, Schweiz |
| | RV 1,84 (gemessen mit 0,5 g in 100 ml m-Kresol bei 20 °C) | |
| | Glasübergangstemperatur 140 °C | |
| Polyamid 616 (B1) | Teilkristallines linear aliphatisches Polyamid 616 aus 1,6-Hexandiamin und 1,16-Hexadecandisäure | EMS-CHEMIE AG, Schweiz |
| | RV 1,95 (gemessen mit 0,5 g in 100 ml m-Kresol bei 20 °C) | |
| | Schmelzpunkt 196 °C | |
| Polyamid 1016 (B2) | Teilkristallines linear aliphatisches Polyamid 1016 aus 1,10-Decandiamin und 1,16-Hexadecandisäure | EMS-CHEMIE AG, Schweiz |
| | RV 1,77(gemessen mit 0,5 g in 100 ml m-Kresol bei 20 °C) | |
| | Schmelzpunkt 176 °C | |
| Polyamid 12 (B3) | Teilkristallines linear aliphatisches Polyamid 12 aus Laurinlactam | EMS-CHEMIE AG, Schweiz |
| | RV 1,90 (gemessen mit 0,5 g in 100 ml m-Kresol bei 20 °C) | |
| | Schmelzpunkt 178 °C | |

| | | |
|---|---|---|
| RV: relative Viskosität gemessen an einer Lösung von 0,5 g Polyamid in 100 ml m-Kresol bei 20°C. | | |

**Tabelle 2: In den Beispielen und Vergleichsbeispielen verwendete Materialien.**

| **Komponenten** | **Beschreibung** | **Handelsname** | **Hersteller** |
|---|---|---|---|
| Antioxidans 1 | N,N'-Hexan-1,6-diylbis[3-(3,5-di-tert-butyl-4-hydroxyphenyl-propionamid CAS-NR.: 23128-74-7 | Irganox 1098 | BASF SE, Deutschland |
| Antioxidans 2 | Tris(2,4-ditert-butylphenyl)phosphit CAS-Nr.: 31570-04-4 | Irgafos 168 | BASF SE, Deutschland |

### 3 Beispiele und Vergleichsbeispiele

### 3.1 Allgemeine Herstellungsvorschrift

Die Herstellung der Polyamide (A) bzw. der Polyamide (B1) und (B2) erfolgt auf an sich bekannte Weise in bekannten, rührbaren Druckautoklaven mit einem Vorlagegefäß und einem Reaktionsgefäß.

Im Vorlagegefäß wird deionisiertes Wasser vorgelegt und die Monomere und etwaige Zusatzstoffe zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 270 bis 310 °C bei einem Druck von maximal 30 bar aufgeheizt. Der Ansatz wird in der Druckphase für 2 bis 4 Stunden auf der Reaktionstemperatur gehalten. In der anschließenden Entspannungsphase wird der Druck innerhalb von 1 bis 2,5 Stunden auf atmosphärischen Druck reduziert, wobei die Temperatur leicht sinken kann. In der folgenden Entgasungsphase wird der Ansatz bei atmosphärischem Druck für 1 bis 2,5 Stunden auf einer Temperatur von 270 bis 300 °C gehalten. Die Polymerschmelze wird in Strangform ausgetragen, im Wasserbad bei 15 bis 80 °C abgekühlt und granuliert. Das Granulat wird bei 80 bis 120 °C unter Stickstoff oder im Vakuum auf einen Wassergehalt von weniger als 0,1 Gew.-% getrocknet.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate. Die Katalysatoren werden im Bereich von 0,01 bis 0,5 Gew.-% und bevorzugt 0,03 bis 0,1 Gew.-%, bezogen auf das Polyamid, zugegeben.

Geeignete Entschäumer zur Vermeidung der Schaumbildung während der Entgasung sind wässrige, 10 %-ige Emulsionen, die Silicone oder Siliconderivate enthalten und in Mengen von 0,01 bis 1,0 Gew.-%, bevorzugt 0,01 bis 0,10 Gew.-%, bezogen auf das Polyamid, eingesetzt werden.

Die Einstellung der relativen Viskosität und damit der Molmasse kann in an sich bekannter Weise, z.B. über monofunktionelle Amine oder Carbonsäuren, und/oder difunktionelle Diamine oder Dicarbonsäuren als Kettenregler erfolgen. Die Kettenregler können einzeln oder in Kombination verwendet werden. Die übliche Einsatzmenge der monofunktionellen Kettenregler liegt bei 0,1 bis 2 Mol-%, bezogen auf 100 Mol-% für das Polyamid.

### 3.2 Allgemeine Herstellungs- und Verarbeitungsvorschrift für die Polyamid-Formmassen

Zur Herstellung der erfindungsgemäßen Polyamid-Formmasse werden die Komponenten A), B) und gegebenenfalls C) auf üblichen Compoundiermaschinen, wie z.B. ein- oder zweiwelligen Extrudern oder Schneckenknetern gemischt. Die Komponenten werden dabei einzelnen über gravimetrische Dosierwaagen in den Einzug oder jeweils in einen Sidefeeder dosiert oder in Form eines Dryblends zugeführt.

Werden Zusatzstoffe (Komponente C)) verwendet, können diese direkt oder in Form eines Masterbatches eingebracht werden. Bei dem Trägermaterial des Masterbatches handelt es sich bevorzugt um ein Polyamid oder ein Polyolefin. Unter den Polyamiden eignet sich dazu besonders das Polyamid der jeweiligen Komponenten A).

Zur Dryblend-Herstellung werden die getrockneten Granulate der Komponenten A), B) und gegebenenfalls C) in einem geschlossenen Behälter vermischt. Diese Mischung wird mittels eines Taumelmischers, Rhönradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 250 bis 320 °C, wobei die Temperatur des ersten Zylinders unter 170 °C eingestellt werden kann. Vor der Düse kann entgast werden. Dies kann mittels Vakuum oder atmosphärisch erfolgen. Die Schmelze wird in Strangform ausgetragen, im Wasserbad bei 10 bis 80 °C abgekühlt und anschließend granuliert. Das Granulat wird bei 80 bis 120 °C unter Stickstoff oder im Vakuum auf einen Wassergehalt von unter 0,1 Gew.-% getrocknet.

Die Verarbeitung der erfindungsgemäßen Polyamid-Formmassen im Spritzguss erfolgt bei Zylindertemperaturen von 250 bis 320 °C, wobei ein vom Einzug zur Düse hin auf- und absteigendes Temperaturprofil verwendet werden kann. Die Werkzeugtemperatur wird auf eine Temperatur von 40 bis 140 °C, bevorzugt 60 bis 120 °C eingestellt.

### 3.3 Herstellung der Polyamid-Formmasse gemäß Beispiel 1

Die getrockneten Granulate der Komponenten (A) und (B) und die Zusatzstoffe (C) wurden zu einem Dryblend vermischt, und zwar in dem in der Tabelle 3 angegebenen Verhältnis. Diese Mischung wurde mittels eines Taumelmischers ca. 20 Minuten lang homogenisiert.

Die Polyamid-Formmasse wurde auf einem Zweiwellenextruder der Firma Collin Typ ZK 25T TL hergestellt. Das Dryblend wurde dabei über eine Dosierwaage in den Einzug dosiert.

Die Temperatur des ersten Gehäuses wurde auf 150 °C eingestellt, diejenige der restlichen Gehäuse auf 270 bis 290 °C. Es wurde eine Drehzahl von 150 U/min und ein Durchsatz von 4 kg/h verwendet. Es wurde nicht entgast. Der Schmelzestrang wurde im Wasserbad abgekühlt, geschnitten und das erhaltene Granulat bei 90 °C für 24 h im Vakuum (30 mbar) auf einen Wassergehalt von unter 0,1 Gew.-% getrocknet.

### 3.4 Beispiele und Vergleichsbeispiele

In den folgenden Tabellen 3 und 4 werden die Resultate der Beispiele und Vergleichsbeispiele gemäß vorliegender Erfindung zusammengefasst.

**Tabelle 3: Beispiele.**

| **Komponenten** | **Einheit** | **Beispiele** | | | | | | |
|---|---|---|---|---|---|---|---|---|
| | | **1** | **2** | **3** | **4** | **5** | **6** | **7** |
| PA MACMI/12 (A1) | Gew.-% | 69.65 | 89.65 | - | - | - | - | - |
| PA MACM12 (A2) | Gew.-% | - | - | 69.65 | - | - | - | - |
| PA MACM12/PACM12 (A3) | Gew.-% | - | - | - | 69.65 | 79.65 | 79.65 | - |
| PA MACM16 (A4) | Gew.-% | - | - | - | - | - | - | 79.65 |
| PA 616 (B1) | Gew.-% | 30 | 10 | 30 | 30 | 20 | - | 20 |
| PA 1016 (B2) | Gew.-% | - | - | - | - | - | 20 | - |
| Antioxidans 1 | Gew.-% | 0.25 | 0.25 | 0.25 | 0.25 | 0.25 | 0.25 | 0.25 |
| Antioxidans 2 | Gew.-% | 0.1 | 0.1 | 0.1 | 0.1 | 0.1 | 0.1 | 0.1 |

| **Messwerte** | | | | | | | | |
|---|---|---|---|---|---|---|---|---|
| Haze | % | 0.7 | 0.5 | 0.6 | 2.0 | 1.5 | 2.3 | 9.7 |
| Lichttransmission | % | 93.1 | 93.5 | 93.8 | 93.5 | 93.7 | 92.5 | 86.1 |
| Zug-E-Modul | MPa | 1880 | 1990 | 1480 | 1475 | 1450 | 1470 | 1340 |
| Spannungsrissbeständigkeit | | | | | | | | |
| Toluol | MPa | 29 | 20 | 26 | 59 | 54 | 59 | 54 |
| n-Hexan | MPa | 42 | 35 | 33 | 26 | 25 | 26 | 34 |

**Tabelle 4: Vergleichsbeispiele.**

| **Komponenten** | **Einheit** | **Vergleichsbeispiele** | | | |
|---|---|---|---|---|---|
| | | **8** | **9** | **10** | **11** |
| Polyamid MACMI/12 (A1) | Gew.-% | 69.65 | - | - | - |
| Polyamid MACM12 (A2) | Gew.-% | - | 69.65 | - | - |
| Polyamid MACM12/PACM12 (A3) | Gew.-% | - | - | 69.65 | 79.65 |
| Polyamid 12 (B3) | Gew.-% | 30 | 30 | 30 | 20 |
| Antioxidans 1 | Gew.-% | 0.25 | 0.25 | 0.25 | 0.25 |
| Antioxidans 2 | Gew.-% | 0.1 | 0.1 | 0.1 | 0.1 |

| **Messwerte** | | | | | |
|---|---|---|---|---|---|
| Haze | % | 0.7 | 0.8 | 0.6 | 0.5 |
| Lichttransmission | % | 92.8 | 93.5 | 93.3 | 93.5 |
| Zug-E-Modul | MPa | 1950 | 1580 | 1560 | 1580 |
| Spannungsrissbeständigkeit | | | | | |
| Toluol | MPa | 20 | 24 | 20 | 16 |
| n-Hexan | MPa | 24 | 32 | 31 | 36 |

### 4 Diskussion der Ergebnisse

Die Formmassen der erfindungsgemäßen Beispiele 1 bis 7 (Tabelle 3) zeigen gegen über den Formmassen der Vergleichsbeispiele 8 bis 11 (Tabelle 4) bessere Spannungsrissbeständigkeiten bei gleichen oder sogar besseren optischen Eigenschaften. Besonders deutlich geht dies aus dem Vergleich der Beispielen 1 bzw. 2 mit dem Vergleichsbeispiel 8 hervor, welche als Polyamid (A) PA MACMI/12 verwenden und wobei als Polyamid (B) in den Beispielen 1 und 2 PA 616 eingesetzt wird wohingegen das Vergleichsbeispiel 8 PA 12 verwendet. Die Formmasse des Beispiels 2 zeigt schon bei einem Drittel der Zugabemenge von Polyamid 616 als Komponente (B) bessere Spannungsrissbeständigkeiten als die Formmasse des Vergleichsbeispiels 8 mit Polyamid 12 als Komponente (B). Zusätzlich sind noch der Haze und die Lichttransmission der Formmasse des Beispiels 2 gegenüber derjenigen des Vergleichsbeispiels 8 verbessert.

Die Kombination aus sehr guten Spannungrissbeständigkeiten und sehr guten optischen Eigenschaften lässt sich also nur durch den spezifischen, anspruchsgemäßen Blend der Polyamide (A) und (B) erreichen. Blends aus einem amorphen Polyamid und dem häufig eingesetzten teilkristallinen Polyamid 12 ergeben hingegen schlechtere Eigenschaften.

## Patentansprüche

1. Polyamid-Formmasse enthaltend die folgenden Komponenten (A) bis (C) oder bestehend aus diesen Komponenten:
(A) 50 bis 98 Gew.-% mindestens eines amorphen oder mikrokristallines Polyamids, ausgewählt aus der Gruppe bestehend aus PA MACM10, PA MACM12, PA MACM14, PA MACM16, PA MACM18, PA NDT/INDT, PA TMDC10, PA TMDC12, PA TMDC14, PA TMDC16, PA TMDC18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/12, PA 6I/6T/MACMI/MACMT, PA 6I/6T/MACMI/MACMT/12, PA 61/6T/MACMI/MACMT/MACM12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM16/1016, PA MACM18/1018, PA 6I/6T/MACMI/MACMT/MACM12/612, PA 6I/6T/MACMI/MACMT/MACM12, PA MACMI/MACMT/MACM12/12, PA MACMI/MACMT/MACM12, PA 6I/6T/MACMI/MACMT/12, PA 6I/6T/6N/MACMI/MACMT/MACMN, PA TMDC12/TMDCT/TMDC36, PA TMDC12/TMDCI, PA TMDC12/TMDCI/TMDC36 und PA TMDC12/TMDCT und Mischungen oder Copolymeren hiervon, wobei das MACM bis zu maximal 35 Mol-% durch PACM und/oder TMDC ersetzt sein kann, bezogen auf die Summe der molaren Anteile aller Monomere von 100 Mol-% und/oder das Laurinlactam ganz oder teilweise durch Caprolactam ersetzt sein kann,
(B) 2 bis 40 Gew.-% mindestens eines teilkristallinen Polyamids ausgewählt aus der Gruppe bestehend aus PA 616, PA 516, PA 1016 und Mischungen hiervon;
(C) 0 bis 16 Gew.-% mindestens eines Zusatzstoffes;
wobei sich die Mengenanteile der Komponenten (A) bis (C) in Summe auf 100 Gew.-% ergänzen.

2. Polyamid-Formmasse gemäß Anspruch 1, **dadurch gekennzeichnet, dass**
der Anteil von Komponente (A) in der Polyamid-Formmasse im Bereich von 55 bis 95,9 Gew.-%, bevorzugt von 63 bis 94,7 Gew.-% oder 63 bis 93,7 Gew.-% und besonders bevorzugt von 76 bis 89,5 Gew.% bezogen auf das Gesamtgewicht der Polyamid-Formmasse liegt, und/oder
der Anteil von Komponente (B) in der Polyamid-Formmasse im Bereich von 4 bis 35 Gew.-%, bevorzugt von 5 bis 31 Gew.-% und besonders bevorzugt von 10 bis 20 Gew.% bezogen auf das Gesamtgewicht der Polyamid-Formmasse liegt, und/oder
der Anteil von Komponente (C) in der Polyamid-Formmasse im Bereich von 0,1 bis 20 Gew.-%, bevorzugt von 0,3 bis 6 Gew.-% und besonders bevorzugt von 0,5 bis 4 Gew.-%, bezogen auf das Gesamtgewicht der Polyamid-Formmasse, liegt.

3. Polyamid-Formmasse gemäß Anspruch 1 oder 2, **dadurch gekennzeichnet, dass**
der Gehalt an Naphthalindicarbonsäure in Komponente (A) 0 bis 10 Mol-%, bezogen auf die Summe der molaren Anteile aller Monomere von Komponente (A) von 100 Mol-% beträgt; und/oder
der Lactam- und/oder ω-Aminosäuregehalt in Komponente (A) 0 bis 50 Mol-%, bevorzugt 0 bis 40 Mol-% und besonders bevorzugt 0 bis 35 Mol-%, bezogen auf die Summe der molaren Anteile aller Monomere von Komponente (A) von 100 Mol-% beträgt.

4. Polyamid-Formmasse gemäß einem der vorhergehenden Ansprüche, **dadurch gekennzeichnet, dass**
Komponente (A) ausgewählt ist aus der Gruppe bestehend aus PA MACM10, PA MACM12, PA MACM14, PA MACM16, PA MACM18, PA MACM36, PATMDC10, PA TMDC12, PATMDC14, PATMDC16, PA TMDC18, PA NDT/INDT, PA PACM10/11, PA PACM10/12, PA PACM12/612, PA PACM12/PACM14/612/614, PA MACMI/12, PA MACMT/12, PA MACMI/MACM12, PA MACMT/MACM12, PA MACMI/MACMT/12, PA MACMI/MACMT/MACM12, PA MACMI/MACMT/MACM12/12, PA MACMI/MACMT/MACM12, PA 6I/6T/MACMI/MACMT, PA 61/6T/MACMI/ MACMT/12, PA 6I/6T/MACMI/MACMT/MACM 12/12, PA 6I/6T/MACMI/MACMT/MACM12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM 16/1016, PA MACM 18/1018, PA MACM10/PACM10, PA MACM12/PACM12, PA MACM14/PACM14, PA MACM16/PACM16, PA MACM18/PACM18, PA 6I/6T/MACMI/MACMT/PACMI/PACMT/12, PA 6I/6T/MACMI/MACMT/MACM12/PACMI/PACMT/PACM12 und Mischungen oder Copolymeren hiervon,
bevorzugt ist Komponente (A) ausgewählt aus der Gruppe bestehend aus PA MACM12, PA MACM14, PA MACM16, PA MACM18, PA TMDC16, PATMDC18, PA NDT/INDT, PA PACM12/612, PA PACM12/PACM14/612/614, PA MACMI/12, PA MACMT/12, PA MACMI/MACM12, PA MACMI/MACMT/12, PA MACMI/MACMT/MACM12, PA 6I/6T/MACMI/MACMT/12, PA MACM10/1010, PA MACM12/1012, PA MACM12/1212, PA MACM14/1014, PA MACM16/1016, PA MACM18/1018, PA MACM10/PACM10, PA MACM12/PACM12, PA MACM14/PACM14, PA MACM16/PACM16, PA MACM18/PACM18, PA 6I/6T/MACMI/MACMT/PACMI/PACMT/12 und Mischungen hiervon; und insbesondere bevorzugt ist Komponente (A) ausgewählt aus der Gruppe bestehend aus PA MACM14, PA MACM16, PA MACM18, PA MACMI/12, PA MACMI/MACM12, PA MACMI/MACMT/12, PA MACMI/MACMT/MACM12, PA 6I/6T/MACMI/MACMT/12, PA MACM10/1010, PA MACM12/1012, PA MACM12/1212, PA MACM14/1014, PA MACM16/1016, PA MACM18/1018, PA MACM12/PACM12, PA MACM14/PACM14, PA MACM16/PACM16, PA MACM18/PACM18, PA 6I/6T/MACMI/MACMT/PACMI/PACMT/12 und Mischungen hiervon.

5. Polyamid-Formmasse gemäß einem der vorhergehenden Ansprüche, **dadurch gekennzeichnet, dass**
Komponente (A) ganz besonders bevorzugt ausgewählt ist aus der Gruppe bestehend aus PA MACM14, PA MACM16, PA MACM18, PA MACMI/12, PA MACMI/MACMT/12, PA MACM10/1010, PA MACM14/1014, PA MACM16/1016, PA MACM18/1018, PA MACM12/PACM12, PA MACM14/PACM14, PA MACM16/PACM16, PA MACM18/PACM18 und Mischungen hiervon.

6. Polyamid-Formmasse gemäß einem der vorhergehenden Ansprüche, **dadurch gekennzeichnet, dass**
die Zusatzstoffe (C) ausgewählt sind aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Kohlenstoffnanoröhrchen, photochromen Agenzien, Antistatika, Entformungsmitteln, Kondensationskatalysatoren, Kettenreglern, Entschäumern, Antiblockmitteln, kettenverlängernden Additiven, optischen Aufhellern, IR-Absorbern, NIR-Absorbern, halogenhaltigen Flammschutzmitteln, halogenfreien Flammschutzmitteln, natürlichen Schichtsilikaten, synthetischen Schichtsilikaten, metallischen Pigmenten, Metallflittern, metallbeschichteten Partikeln, teilchenförmigen Füllstoffen, faserförmigen Füllstoffen, nanoskaligen Füllstoffen mit einem Partikeldurchmesser (*d₉₅*) von maximal 100 nm, bestimmt mittels Laserbeugung nach ISO 13320 (2009) und Mischungen davon.

7. Polyamid-Formmasse gemäß Anspruch 6, **dadurch gekennzeichnet, dass**
die faserförmigen Füllstoffe ausgewählt sind aus der Gruppe bestehend aus Glasfasern, Carbonfasern, Metallfasern, Aramidfasern, pflanzlichen Fasern, Cellulosefasern, insbesondere Nano-Cellulosefasern, Polymerfasern, Whiskers, Mineralfasern und Mischungen hiervon, bevorzugt Carbonfasern, Metallfasern, Aramidfasern, pflanzlichen Fasern, Cellulosefasern, insbesondere Nano-Cellulosefasern, Polymerfasern, Whiskers, Mineralfasern und Mischungen hiervon.

8. Polyamid-Formmasse gemäß einem der vorhergehenden Ansprüche, **dadurch gekennzeichnet, dass**
das teilkristalline Polyamid (B) ausgewählt ist aus der Gruppe bestehend aus PA 616, PA 1016 und Mischungen hiervon und bevorzugt PA 616 ist.

9. Polyamid-Formmasse gemäß einem der vorhergehenden Ansprüche, **dadurch gekennzeichnet, dass**
die Polyamid-Formmasse genau ein amorphes oder mikrokristallines Polyamid (A) und genau ein teilkristallines Polyamid (B) enthält.

10. Polyamid-Formmasse gemäß einem der vorhergehenden Ansprüche, **dadurch gekennzeichnet, dass**
der an einem aus der Polyamid-Formmasse hergestellten Formkörper (2 mm dicke Platten mit Breite und Länge: 60 x 60 mm) nach ASTM D1003 gemessene Haze der Polyamid-Formmasse, < 15 %, bevorzugt < 10 % ist und besonders bevorzugt < 6% und ganz besonders bevorzugt < 1,0 %liegt; und/oder
die an einem aus der Polyamid-Formmasse hergestellten Formkörper (2 mm dicke Platten mit Breite und Länge: 60 x 60 mm) nach ASTM D1003 gemessene Transparenz mindestens 80 %, bevorzugt mindestens 85 % und besonders bevorzugt mindestens 90 % beträgt.

11. Polyamid-Formmasse gemäß einem der vorhergehenden Ansprüche, **dadurch gekennzeichnet, dass** ein Prüfkörper aus der Polyamid-Formmasse
einen Zug-E-Modul bestimmt nach ISO 527 (2012) von mindestens 1000 MPa, bevorzugt mindestens 1200 MPa und besonders bevorzugt mindestens 1300 MPa aufweist; und/oder
eine Spannungsrissbeständigkeit in Toluol bestimmt nach DIN 53449-3 (1984) Biegestreifenverfahren von mindestens 20 MPa, bevorzugt mindestens 25 MPa und besonders bevorzugt mindestens 30 MPa aufweist; und/oder
eine Spannungsrissbeständigkeit in n-Hexan bestimmt nach DIN 53449-3 (1984) Biegestreifenverfahren von mindestens 20 MPa, bevorzugt mindestens 25 MPa und besonders bevorzugt mindestens 30 MPa aufweist.

12. Formkörper herstellbar aus einer Polyamid-Formmasse nach einem der Ansprüche 1 bis 11.

13. Formkörper nach Anspruch 12 **dadurch gekennzeichnet, dass**
der Formkörper ausgewählt ist aus der Gruppe bestehend aus Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks), Schutzhüllen für Mobiltelefone, Sichtteilen im Computer und Telekommunikationsbereich, Rohren, Schläuchen, Folien und Bauteilen von E-Zigaretten.

14. Verwendung der Polyamid-Formmassen nach einem der Ansprüche 1 bis 11 zur Herstellung von Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks), Schutzhüllen für Mobiltelefone, Sichtteilen im Computer und Telekommunikationsbereich, Rohren, Schläuchen, Folien und Bauteilen von E-Zigaretten.

## Claims

1. A polyamide moulding compound comprising the following components (A) to (C) or consisting of these components:
(A) 50 to 98 wt% of at least one amorphous or microcrystalline polyamide selected from the group comprising PA MACM10, PA MACM12, PA MACM14, PA MACM16, PA MACM18, PA NDT/INDT, PA TMDC10, PA TMDC12, PA TMDC14, PA TMDC16, PA TMDC18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/12, PA 6I/6T/MACMI/MACMT, PA 6I/6T/MACMI/MACMT/12, PA 6I/6T/MACMI/MACMT/MACM12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM16/1016, PA MACM18/1018, PA 6I/6T/MACMI/MACMT/MACM12/612, PA 6I/6T/MACMI/MACMT/MACM12, PA MACMI/MACMT/MACM12/12, PA MACMI/MACMT/MACM12, PA 6I/6T/MACMI/MACMT/12, PA 6I/6T/6N/MACMI/MACMT/MACMN, PA TMDC12/TMDCT/TMDC36, PA TMDC12/TMDCI, PA TMDC12/TMDCI/TMDC36, and PA TMDC12/TMDCT and mixtures or copolymers hereof, where the MACM can be replaced up to a maximum of 35 mol% with PACM and/or TMDC, related to the sum of the molar proportions of all the monomers of 100 mol%, and/or where the lauric lactam can be wholly or partially replaced with caprolactam;
(B) 2 to 40 wt% of at least one semi-crystalline polyamide selected from the group comprising PA 616, PA 516, PA 1016 and mixtures hereof;
(C) 0 to 16 wt% of at least one additive,
wherein the quantity proportions of the components (A) to (C) add up to 100 wt% in sum.

2. A polyamide moulding compound in accordance with claim 1, **characterized in that**
the proportion of component (A) in the polyamide moulding compound is in the range from 55 to 95.9 wt%, preferably from 63 to 94.7 wt% or 63 to 93.7 wt%, and particularly preferably from 76 to 89.5 wt%, with respect to the total weight of the polyamide moulding compound; and/or
the proportion of component (B) in the polyamide moulding compound is in the range from 4 to 35 wt%, preferably from 5 to 31 wt%, and particularly preferably from 10 to 20 wt%, with respect to the total weight of the polyamide moulding compound; and/or
the proportion of component (C) in the polyamide moulding compound is in the range from 0.1 to 20 wt%, preferably from 0.3 to 6 wt%, and particularly preferably from 0.5 to 4 wt%, with respect to the total weight of the polyamide moulding compound.

3. A polyamide moulding compound in accordance with claim 1 or claim 2, **characterized in that**
the content of napthalenedicarboxylic acid in component (A) amounts to 0 to 10 mol%, with respect to the sum of the molar proportions of all the monomers of component (A) of 100 mol%; and/or
the lactam and/or ω-amino acid content in component (A) amounts to 0 to 50 mol%, preferably 0 to 40 mol%, and particularly preferably 0 to 35 mol%, with respect to the sum of the molar proportions of all the monomers of component (A) of 100 mol%.

4. A polyamide moulding compound in accordance with one of the preceding claims, **characterized in that**
component (A) is selected from the group comprising PA MACM10, PA MACM12, PA MACM14, PA MACM16, PA MACM18, PA MACM36, PA TMDC10, PA TMDC12, PA TMDC14, PA TMDC16, PA TMDC18, PA NDT/INDT, PA PACM10/11, PA PACM10/12, PA PACM12/612, PA PACM12/PACM14/612/614, PA MACMI/12, PA MACMT/12, PA MACMI/MACM12, PA MACMT/MACM12, PA MACMI/MACMT/12, PA MACMI/MACMT/MACM12, PA MACMI/MACMT/MACM12/12, PA MACMI/MACMT/MACM12, PA 6I/6T/MACMI/MACMT, PA 6I/6T/MACMI/ MACMT/12, PA 6I/6T/MACMI/MACMT/MACM12/12, PA 6I/6T/MACMI/MACMT/MACM12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM16/1016, PA MACM18/1018, PA MACM10/PACM10, PA MACM12/PACM12, PA MACM14/PACM14, PA MACM16/PACM16, PA MACM18/PACM18, PA 6I/6T/MACMI/MACMT/PACMI/PACMT/12, PA 6I/6T/MACMI/MACMT/MACM12/PACMI/PACMT/PACM12, and mixtures or copolymers hereof;
component (A) is preferably selected from the group comprising PA MACM12, PA MACM14, PA MACM16, PA MACM18, PA TMDC16, PA TMDC18, PA NDT/INDT, PA PACM12/612, PA PACM12/PACM14/612/614, PA MACMI/12, PA MACMT/12, PA MACMI/MACM12, PA MACMI/MACMT/12, PA MACMI/MACMT/MACM12, PA 6I/6T/MACMI/MACMT/12, PA MACM10/1010, PA MACM12/1012, PA MACM12/1212, PA MACM14/1014, PA MACM16/1016, PA MACM18/1018, PA MACM10/PACM10, PA MACM12/PACM12, PA MACM14/PACM14, PA MACM16/PACM16, PA MACM18/PACM18, PA 6I/6T/MACMI/MACMT/PACMI/PACMT/12, and mixtures hereof; and component (A) is in particular preferably selected from the group comprising PA MACM14, PA MACM16, PA MACM18, PA MACMI/12, PA MACMI/MACM12, PA MACMI/MACMT/12, PA MACMI/MACMT/MACM12, PA 6I/6T/MACMI/MACMT/12, PA MACM10/1010, PA MACM12/1012, PA MACM12/1212, PA MACM14/1014, PA MACM16/1016, PA MACM18/1018, PA MACM12/PACM12, PA MACM14/PACM14, PA MACM16/PACM16, PA MACM18/PACM18, PA 6I/6T/MACMI/MACMT/PACMI/PACMT/12, and mixtures hereof.

5. A polyamide moulding compound in accordance with one of the preceding claims, **characterized in that**
component (A) is very particularly preferably selected from the group comprising PA MACM14, PA MACM16, PA MACM18, PA MACMI/12, PA MACMI/MACMT/12, PA MACM10/1010, PA MACM14/1014, PA MACM16/1016, PA MACM18/1018, PA MACM12/PACM12, PA MACM14/PACM14, PA MACM16/PACM16, PA MACM18/PACM18, and mixtures hereof.

6. A polyamide moulding compound in accordance with one of the preceding claims, **characterized in that**
the additives (C) are selected from the group comprising inorganic and organic stabilizers, in particular antioxidants, antiozonants, light protection agents, in particular UV stabilizers, UV absorbers, or UV blockers, lubricants, colorants, marking agents, pigments, carbon black, graphite, graphene, carbon nanotubes, photochromic agents, antistatic agents, de moulding means, condensation catalysts, chain regulators, anti-foaming agents, anti-blocking agents, chain-extending additives, optical brighteners, IR absorbers, NIR absorbers, halogenated flame retardants, halogen-free flame retardants, natural sheet silicates, synthetic sheet silicates, metallic pigments, metal glitter, metal-coated particles, particulate fillers, fibrous fillers, nanoscale fillers having a particle diameter (*d₉₅*) of a maximum of 100 nm, determined by means of laser diffraction in accordance with ISO 13320 (2009), and mixtures thereof.

7. A polyamide moulding compound in accordance with claim 6, **characterized in that**
the fibrous fillers are selected from the group comprising glass fibers, carbon fibers, metal fibers, aramid fibers, vegetable fibers, cellulose fibers, in particular nano-cellulose fibers, polymer fibers, whiskers, mineral fibers, and mixtures hereof; preferably carbon fibers, metal fibers, aramid fibers, vegetable fibers, cellulose fibers, in particular nano-cellulose fibers, polymer fibers, whiskers, mineral fibers, and mixtures hereof.

8. A polyamide moulding compound in accordance with one of the preceding claims, **characterized in that**
the semi-crystalline polyamide (B) is selected from the group comprising PA 616, PA 1016 and mixtures hereof, and is preferably PA 616.

9. A polyamide moulding compound in accordance with one of the preceding claims, **characterized in that**
the polyamide moulding compound contains exactly one amorphous or microcrystalline polyamide (A) and exactly one semi-crystalline polyamide (B).

10. A polyamide moulding compound in accordance with one of the preceding claims, **characterized in that**
the haze of the polyamide moulding compound measured in accordance with ASTM D1003 at a moulded body (2 mm thick plates with a width and length: 60 x 60 mm) produced from the polyamide moulding compound is < 15%, preferably < 10%, particularly preferably < 6%, and very particularly preferably < 1.0; and/or
the transparency measured in accordance with ASTM D1003 at a moulded body (2 mm thick plates with a width and length: 60 x 60 mm) produced from the polyamide moulding compound is at least 80%, preferably at least 85% and particularly preferably at least 90%.

11. A polyamide moulding compound in accordance with one of the preceding claims, **characterized in that** test specimen from the polyamide moulding compound has
a modulus of elasticity determined in accordance with ISO 527 (2012) of at least 1000 MPa, preferably at least 1200 MPa, and particularly preferably at least 1300 MPa; and/or
a stress cracking resistance in toluol determined in accordance with DIN 53449-3 (1984) bent strip test of at least 20 MPa, preferably at least 25 MPa, and particularly preferably at least 30 MPa; and/or
a stress cracking resistance in n-hexane determined in accordance with DIN 53449-3 (1984) bent strip test of at least 20 MPa, preferably at least 25 MPa, and particularly preferably at least 30 MPa.

12. A moulded body that can be manufactured from a polyamide moulding compound in accordance with one of the claims 1 to 11.

13. A moulded body in accordance with claim 12, **characterized in that**
the moulded body is selected from the group comprising trim elements, in particular in the passenger space of automobiles or in the fashion sector, sports articles, in particular ski boots, midsoles for sports shoes, leisure articles, toys, in particular construction elements, modules, figures or models, domestic articles, in particular containers, bowls, dishes, cans, beakers, baby bottles or drinking bottles, components of kitchen appliances, components of eyeglasses, in particular glasses frames or glasses arms, in particular for safety goggles, sports glasses, or ski goggles, furniture fittings, inserted soles, construction parts and visible parts for units in the sanitary area, hygiene area, and cosmetic area, parts of safety shoes, in particular caps, drip filter cups, inspection glasses, flowmeters, blow-out disks, containers, housings, and housing parts for electric devices and electronic devices, in particular for razors, epilators, measurement units, infrared keys, cellular phones, players, personal digital assistants (PDAs), smartphones or storage media (e.g. USB sticks), protective covers for cellular phones, visible parts in the area of computers and telecommunications, tubes, hoses, films and components of E-cigarettes.

14. Use of the polyamide moulding compounds in accordance with one of the claims 1 to 11 for manufacturing trim elements, in particular in the passenger space of automobiles or in the fashion sector, sports articles, in particular ski boots, midsoles for sports shoes, leisure articles, toys, in particular construction elements, modules, figures or models, domestic articles, in particular containers, bowls, dishes, cans, beakers, baby bottles or drinking bottles, components of kitchen appliances, components of eyeglasses, in particular glasses frames or glasses arms, in particular for safety goggles, sports glasses, or ski goggles, furniture fittings, inserted soles, construction parts and visible parts for units in the sanitary area, hygiene area, and cosmetic area, parts of safety shoes, in particular caps, drip filter cups, inspection glasses, flowmeters, blow-out disks, containers, housings, and housing parts for electric devices and electronic devices, in particular for razors, epilators, measurement units, infrared keys, cellular phones, players, personal digital assistants (PDAs), smartphones or storage media (e.g. USB sticks), protective covers for cellular phones, visible parts in the area of computers and telecommunications, tubes, hoses, films and components of E-cigarettes.

## Revendications

1. Matière à mouler à base de polyamide contenant les composants suivants (A) à (C) ou constituée de ces composants :
(A) de 50 à 98 % en poids d'au moins un polyamide amorphe ou microcristallin, choisi dans le groupe constitué des PA MACM10, PA MACM12, PA MACM14, PA MACM16, PA MACM18, PA NDT/INDT, PA TMDC10, PA TMDC12, PA TMDC14, PA TMDC16, PA TMDC18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/12, PA 6I/6T/MACMI/MACMT, PA 61/6T/MACMI/MACMT/12, PA 61/6T/MACMI/MACMT/MACM12, PA MACM6/11, PA MACM6/12, PA MACM10/11, PA MACM10/12, PA MACM 10/1010, PA MACM12/1012, PA MACM 12/1212, PA MACM 14/1014, PA MACM 14/1214, PA MACM 16/1016, PA MACM18/1018, PA 6I/6T/MACMI/MACMT/MACM12/612, PA 61/6T/MACMI/MACMT/MACM12, PA MACMI/MACMT/MACM12/12, PA MACMI/MACMT/MACM12, PA 61/6T/MACMI/MACMT/12, PA 6I/6T/6N/MACMI/MACMT/MACMN, PA TMDC12/TMDCT/TMDC36, PA TMDC12/TMDCI, PA TMDC12/TMDCI/TMDC36 et PA TMDC12/TMDCT et leurs mélanges ou copolymères, où le MACM peut être remplacé par le PACM et/ou le TMDC jusqu'à un maximum de 35 %en moles, par rapport à la somme de toutes les proportions molaires de tous les monomères de 100 % en moles, et/ou le lactame laurique peut être remplacé totalement ou partiellement par du caprolactame,
(B) de 2 à 40 % en poids d'au moins un polyamide partiellement cristallin choisi dans le groupe constitué des PA 616, PA 516, PA 1016 et de leurs mélanges ;
(C) de 0 à 16 % en poids d'au moins un additif ;
où les proportions en poids des composants (A) à (C) se complètent à 100 % en poids dans leur somme.

2. Matière à mouler à base de polyamide selon la revendication 1, **caractérisée en ce que**
la proportion du composant (A) dans la matière à mouler à base de polyamide se situe dans la plage de 55 à 95,9 % en poids, de préférence, de 63 à 94,7 % en poids ou de 63 à
93,7 % en poids et de manière particulièrement préférée, de 76 à 89,5 % en poids par rapport au poids total de la matière à mouler à base de polyamide, et/ou
la proportion du composant (B) dans la matière à mouler à base de polyamide se situe dans la plage de 4 à 35 % en poids, de préférence de 5 à 31 % en poids et de manière particulièrement préférée de 10 à 20 % en poids par rapport au poids total de la matière à mouler à base de polyamide, et/ou
la proportion du composant (C) dans la matière à mouler à base de polyamide se situe dans la plage de 0,1 à 20 % en poids, de préférence de 0,3 à 6 % en poids et de manière particulièrement préférée de 0,5 à 4 % en poids par rapport au poids total de la matière à mouler à base de polyamide.

3. Matière à mouler à base de polyamide selon la revendication 1 ou la revendication 2, **caractérisée en ce que**
la teneur en acide naphtalène dicarbonique dans le composant (A) se situe de 0 à 10 % en moles, par rapport à la somme des proportions molaires de tous les monomères du composant (A) de 100 % en moles ; et/ou
la teneur en lactame et/ou en acide ω-aminé dans le composant (A) est de 0 à 50 % en moles, de préférence de 0 à 40 % en moles et de manière particulièrement préférée de 0 à 35 % en moles, par rapport à la somme des proportions molaires de tous les monomères du composant (A) de 100 % en moles.

4. Matière à mouler à base de polyamide selon l'une des revendications précédentes, **caractérisée en ce que**
la composante (A) est choisie dans le groupe constitué des PA MACM10, PA MACM 12, PA MACM 14, PA MACM 16, PA MACM 18, PA MACM36, PA TMDC10, PA TMDC12, PA TMDC14, PA TMDC16, PA TMDC18, PA NDT/INDT, PA PACM10/11, PA PACM10/12, PA PACM12/612, PA PACM12/PACM14/612/614, PA MACMI/12, PA MACMT/12, PA MACMI/MACM12, PA MACMT/MACM12, PA MACMI/MACMT/12, PA MACMI/MACMT/MACM12, PA MACMI/MACMT/MACM 12/12, PA MACMI/MACMT/MACM12, PA 6I/6T/MACMI/MACMT, PA 6I/6T/MACMI/ MACMT/12, PA 6I/6T/MACMI/MACMT/MACM12/12, PA 61/6T/MACMI/MACMT/MACM12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM16/1016, PA MACM18/1018, PA MACM10/PACM10, PA MACM12/PACM12, PA MACM14/PACM14, PA MACM16/PACM16, PA MACM18/PACM18, PA 6I/6T/MACMI/MACMT/PACMI/PACMT/12, PA 6I/6T/MACMI/MACMT/MACM12/PACMI/PACMT/PACM12 et leurs mélanges ou copolymères,
le composant (A) est de préférence choisi dans le groupe constitué des PA MACM12, PA MACM14, PA MACM16, PA MACM18, PA TMDC16, PA TMDC18, PA NDT/INDT, PA PACM 12/612, PA PACM12/PACM14/612/614, PA MACMI/12, PA MACMT/12, PA MACMI/MACM12, PA MACMI/MACMT/12, PA MACMI/MACMT/MACM12, PA 61/6T/MACMI/MACMT/12, PA MACM10/1010, PA MACM12/1012, PA MACM12/1212, PA MACM 14/1014, PA MACM 16/1016, PA MACM 18/1018, PA MACM10/PACM10, PA MACM12/PACM12, PA MACM14/PACM14, PA MACM16/PACM16, PA MACM18/PACM18, PA 6I/6T/MACMI/MACMT/PACMI/PACMT/12 et de leurs mélanges ; et de préférence en particulier, le composant (A) est choisi dans le groupe constitué des PA MACM14, PA MACM16, PA MACM18, PA MACMI/12, PA MACMI/MACM12, PA MACMI/MACMT/12, PA MACMI/MACMT/MACM12, PA 61/6T/MACMI/MACMT/12, PA MACM10/1010, PA MACM12/1012, PA MACM12/1212, PA MACM 14/1014, PA MACM 16/1016, PA MACM 18/1018, PA MACM12/PACM12, PA MACM14/PACM14, PA MACM16/PACM16, PA MACM18/PACM18, PA 6I/6T/MACMI/MACMT/PACMI/PACMT/12 et de leurs mélanges.

5. Matière à mouler à base de polyamide selon l'une des revendications précédentes, **caractérisée en ce que**
le composant (A) est choisi de manière particulièrement préférée dans le groupe constitué des PA MACM14, PA MACM16, PA MACM18, PA MACMI/12, PA MACMI/MACMT/12, PA MACM 10/1010, PA MACM 14/1014, PA MACM 16/1016, PA MACM 18/1018, PA MACM12/PACM12, PA MACM14/PACM14, PA MACM16/PACM16, PA MACM18/PACM18 et de leurs mélanges.

6. Matière à mouler à base de polyamide selon l'une des revendications précédentes, **caractérisée en ce que**
les additifs (C) sont choisis dans le groupe constitué de stabilisants inorganiques et organiques, notamment d'antioxydants, d'agents anti ozone, d'agents photo protecteurs, notamment de stabilisants UV, d'absorbants UV ou de bloquants d'UV, d'agents de glissement, de colorants, de produits de marquage, de pigments, de suie, de graphite, de graphène, ne nanotubes de carbone, d'agents photochromes, d'antistatiques, de produits de démoulage, de catalyseurs de condensation, de régulateurs de chaîne, de démoussants, d'agent anti bloquants, d'additifs de prolongement de chaîne, d'éclaircissants optiques, d'absorbants IR, d'absorbants NIR, de retardateurs de flamme contenant des halogènes, de retardateurs de flamme exempts d'halogène, de phyllosilicates naturels, de phyllosilicates synthétiques, de pigments métalliques, de paillettes métalliques, de particules de revêtement métallique, de charges de forme particulaire, de charges en forme de fibres, de charges d'échelle nanométrique avec un diamètre particulaire (*d₉₅*) d'au maximum 100 nm, déterminé au moyen de la diffraction laser selon la norme ISO 13320 (2009) et de mélanges de ceux-ci.

7. Matière à mouler à base de polyamide selon la revendication 6, **caractérisée en ce que**
les charges en forme de fibres sont choisies dans le groupe constitué des fibres de verre, des fibres de carbone, des fibres métalliques, des fibres d'aramide, des fibres végétales, des fibres de cellulose, notamment de nanofibres de cellulose, de fibres de polymères, de whiskers, de fibres minérales et de leurs mélanges, les fibres de carbone, les fibres métalliques, les fibres d'aramide, les fibres végétales, les fibres de cellulose, notamment les nanofibres de cellulose, les fibres de polymères, les whiskers, les fibres minérales et leurs mélanges sont préférées.

8. Matière à mouler à base de polyamide selon l'une des revendications précédentes, **caractérisée en ce que**
le polyamide partiellement cristallin (B) est choisi dans le groupe constitué du PA 616, du PA 1016 et de leurs mélanges et est de préférence le PA 616.

9. Matière à mouler à base de polyamide selon l'une des revendications précédentes, **caractérisée en ce que**
la matière à mouler à base de polyamide contient précisément un polyamide amorphe ou microcristallin (A) et précisément un polyamide partiellement cristallin (B).

10. Matière à mouler à base de polyamide selon l'une des revendications précédentes, **caractérisée en ce que**
le voile de la matière à mouler à base de polyamide mesuré sur un corps moulé fabrique à base de la matière à mouler à base de polyamide (plaques de 2 mm d'épaisseur avec une largeur et une longueur : 60 x 60 mm) selon la norme ASTM D1003 est < 15 %, de préférence < 10 % et de manière particulièrement préférée < 6 % et idéalement < 1,0 % ; et/ou
la transparence mesurée sur un corps moulé fabriqué à partir de la matière à mouler à base de polyamide (plaques de 2 mm d'épaisseur avec une largeur et une longueur : 60 x 60 mm) selon ASTM D1003 est d'au moins 80 %, de préférence, d'au moins 85 % et de manière particulièrement préférée, d'au moins 90 %.

11. Matière à mouler à base de polyamide selon l'une des revendications précédentes, **caractérisée en ce qu'**une éprouvette dans la matière à mouler à base de polyamide
présente un module de traction E déterminé selon la norme ISO 527 (2012) d'au moins 1000 MPa, de préférence d'au moins 1200 MPa et de manière particulièrement préférée d'au moins 1300 MPa ; et/ou
une résistance à la rupture sous traction dans du toluène déterminée selon la norme DIN 53449-3 (1984) dans un procédé de pliage en bande d'au moins 20 MPa, de préférence d'au moins 25 MPa et de manière particulièrement préférée d'au moins 30 MPa ; et/ou
une résistance à la rupture sous traction dans du n-hexane déterminée selon la norme DIN 53449-3 (1984) dans un procédé de pliage en bande d'au moins 20 MPa, de préférence d'au moins 25 MPa et de manière particulièrement préférée d'au moins 30 MPa.

12. Corps moulé pouvant être fabriqué à partir d'une matière à mouler à base de polyamide selon l'une des revendications 1 à 11.

13. Corps moulé selon la revendication 12 **caractérisée en ce que**
le corps moulé est choisi dans le groupe constitué d'éléments de décoration, notamment dans les habillages intérieurs des automobiles et de domaine de la mode, d'articles de sport, notamment des chaussures de ski, des semelles intermédiaires pour les chaussures de sport, des articles de loisirs, des jouets, notamment des éléments de construction, des blocs de construction, des figurines ou des modèles, des articles ménagers, notamment de récipients, de plats, de bols, de doses, de gobelets, de biberons ou de bouteilles de boisson, de composants d'appareils ménagers, de composants de lunettes, notamment de montures de lunettes ou de branches de lunettes, en particulier, pour des lunettes de sécurité, des lunettes de sport ou des lunettes de ski, des accessoires pour les meubles, les semelles à insérer, des parties de construction et visibles pour des appareils dans les domaines sanitaires, de l'hygiène et de la cosmétique, de parties de chaussures de sécurité, notamment des coques, des ensembles filtrants, des fenêtres de visualisation, des débitmètres, des disques de rupture, des récipients, des boîtiers ou des parties de boitiers pour les appareils électriques et électroniques, notamment pour des rasoirs, des épilateurs, des appareils de mesure, des clés infrarouges, des téléphones mobiles, des appareils de lecture, des assistants personnels numériques (PDA), des Smartphones ou des supports de stockage (par exemple, des clés USB), des étuis de protection pour téléphones mobiles, des parties de visualisation dans un ordinateur ou dans le domaine des télécommunications, des tubes, des tuyaux, des films et des composants de cigarettes électroniques.

14. Utilisation de la matière à mouler à base de polyamide selon l'une des revendications 1 à 11 pour la fabrication d'éléments décoratifs, notamment dans les habillages intérieurs des automobiles et de domaine de la mode, d'articles de sport, notamment des chaussures de ski, des semelles intermédiaires pour les chaussures de sport, des articles de loisirs, des jouets, notamment des éléments de construction, des blocs de construction, des figurines ou des modèles, des articles ménagers, notamment de récipients, de plats, de bols, de doses, de gobelets, de biberons ou de bouteilles de boisson, de composants d'appareils ménagers, de composants de lunettes, notamment de montures de lunettes ou de branches de lunettes, en particulier, pour des lunettes de sécurité, des lunettes de sport ou des lunettes de ski, des accessoires pour les meubles, les semelles à insérer, des parties de construction et visibles pour des appareils dans les domaines sanitaire, de l'hygiène et de la cosmétique, de parties de chaussures de sécurité, notamment de coques, des ensembles filtrants, des fenêtres de visualisation, des débitmètres, des disques de rupture, des récipients, des boîtiers ou des parties de boitiers pour les appareils électriques et électroniques, notamment pour des rasoirs, des épilateurs, des appareils de mesure, des clés infrarouges, des téléphones mobiles, des appareils de lecture, des assistants personnels numériques (PDA), des Smartphones ou des supports de stockage (par exemple, des clés USB), des étuis de protection pour téléphones mobiles, des parties visibles dans le domaine des ordinateurs ou des télécommunications, des tubes, des tuyaux, des films et de composants de cigarettes électroniques.
